# EUROPÄISCHE PATENTSCHRIFT

(11) **EP 3 987 279 B1**
(45) Veröffentlichungstag und Bekanntmachung des Hinweises auf die Patenterteilung: **08.11.2023**
(21) Anmeldenummer: 20735299.8
(22) Anmeldetag: 24.06.2020
(51) Int. Cl.: G01N 23/20008

(54) **VORRICHTUNG UND VERFAHREN ZUM BESTIMMEN DER WERKSTOFFEIGENSCHAFTEN EINES POLYKRISTALLINEN PRODUKTS**
APPARATUS AND METHOD FOR DETERMINING MATERIAL PROPERTIES OF A POLYCRYSTALLINE PRODUCT
SYSTÈME ET PROCÉDÉ POUR LA DÉTERMINATION DE PROPRIÉTÉS DE MATÉRIAU D'UN PRODUIT POLYCRYSTALLIN

(30) Priorität: 24.06.2019 DE 102019209068
(43) Veröffentlichungstag der Anmeldung: 27.04.2022
(73) Patentinhaber: SMS Group GmbH, 40237 Düsseldorf (DE); IMS Messsysteme GmbH, 42579 Heiligenhaus (DE)
(72) Erfinder: KLINKENBERG, Christian, 58313 Herdecke (DE); SOMMERS, Ulrich, 40627 Düsseldorf (DE); KLEIN, Helmut, 37520 Osterode (DE); LHOEST, Alexandre, 4700 Eupen (BE); PENSIS, Olivier, 4420 Montegnee (BE); KRAUTHAEUSER, Horst, 42579 Heiligenhau (DE)
(74) Vertreter: Kross, Ulrich
(86) Internationale Anmeldenummer: PCT/EP2020/067593
(87) Internationale Veröffentlichungsnummer: WO 2020/260336

(56) Entgegenhaltungen:
- EP-A1- 1 233 265
- EP-A1- 3 062 094
- EP-A1- 3 372 994
- JP-A- S56 100 348
- HERMANN-J. KOPINECK ET AL: "Industrial on-line texture determination in rolled steel strips", JOURNAL OF NONDESTRUCTIVE EVALUATION., Bd. 12, Nr. 1, 1. März 1993 (1993-03-01), Seiten 13-19, XP055285643, US ISSN: 0195-9298, DOI: 10.1007/BF00565904
- TAMURA N ET AL: "Submicron x-ray diffraction and its applications to problems in materials and environmental science", REVIEW OF SCIENTIFIC INSTRUMENTS, AMERICAN INSTITUTE OF PHYSICS, 2 HUNTINGTON QUADRANGLE, MELVILLE, NY 11747, vol. 73, no. 3, 1 March 2002 (2002-03-01), pages 1369-1372, XP012039836, ISSN: 0034-6748, DOI: 10.1063/1.1436539

## Beschreibung

Die Erfindung betrifft ein Verfahren zum Bestimmen der Werkstoffeigenschaften eines polykristallinen, insbesondere metallischen Produkts nach dem Oberbegriff von Anspruch 1 und eine entsprechende bzw. für den gleichen Zweck eingesetzte Vorrichtung nach dem Oberbegriff von Anspruch 17.

Nach dem Stand der Technik ist es bekannt, dass metallische Bänder und Bleche, insbesondere warm- und kalt gewalzte und/oder geglühte Fe-, AI-, Ti-, Ni- und andere metallische Legierungen, im Zuge ihrer kontinuierlichen Herstellung auch überwacht bzw. überprüft werden, um dadurch die resultierende Produkteigenschaften zu kontrollieren. In gleicher Weise gilt dies auch für keramische Werkstoffe, beispielsweise Substrate aus Al₂O₃ oder ZrO₂. Durch eine Regelung von Prozessparametern, insbesondere von Bandtemperatur und/oder -geschwindigkeit in Warmwalz-, Kaltwalz-, Glüh- und Inspektionslinien, können mittels röntgenografischer Online-Bestimmung von anisotropen Werkstoffeigenschaften die Produkteigenschaften optimiert werden.

Der Einsatz der Röntgenstrukturanalyse zur Bestimmung anisotroper, kristalliner Werkstoffeigenschaften zählt im Labormaßstab zum Stand der Technik. Dieses Verfahren beruht darauf, dass ein fein fokussierter oder ein kollimierter, nahezu paralleler Röntgenstrahl auf die Probe gerichtet und am kristallinen Gitter der Probe gebeugt wird. Der Beugungswinkel hängt entsprechend der Bragg-Gleichung von den Gitterparametern und der Wellenlänge des Röntgenstrahls ab. Das resultierende Beugungsbild wird mit einem Detektor aufgenommen. Qualität und Informationsgehalt des vom Detektor aufgenommenen Beugungsbilds hängen ab von der Anzahl der am Detektor ankommenden Photonen und damit von der Intensität des Röntgenstrahls und der Belichtungszeit.

Aus EP 0 352 423 B1 sind ein Verfahren und eine Vorrichtung zur Texturanalyse von gewalzten Blechen und Bändern mit Hilfe von diese durchstrahlenden Röntgenstrahlen bekannt. Hierbei werden die Beugung der Röntgenstrahlen am kristallinen Gitteraufbau des untersuchten Materials analysiert und daraus die Texturwerte berechnet. Die hierbei eingesetzten Detektoren sind energiedispersiv und arbeiten mit polychromatischer Röntgenstrahlung. Eine solche Technologie ist ebenfalls aus einem Artikel von Hermann-J. Kopineck et.al. ("Industrial on-line texture determination in rolled steel strips"; Journal of Nondestructive Evaluation, Vol. 12, No. 1, 1993) bekannt.

Des Weiteren ist im Zusammenhang mit der Röntgenstrukturanalyse auch der Einsatz von winkeldispersiven Detektoren bekannt, die eine monochromatische Röntgenstrahlung erfordern. Der für das winkeldispersive Verfahren benötigte monochromatische Röntgenstrahl wird typischerweise durch einen Kristallfilter geführt, der nur die gewünschte Wellenlänge durchlässt. Anschließend wird der Röntgenstrahl durch eine röntgenoptische Einheit, einen Kollimator oder eine Kapillare zu einem fokussierten Strahl oder zu einem kollimierten Strahl gebündelt.

Bei der industriellen Online-Röntgenstrukturanalyse im Durchstrahl- oder Reflektionsverfahren soll in möglichst kurzer Zeit ein möglichst großes Probenvolumen durchstrahlt werden, um von dem zu untersuchenden Material ein auswertbares, statistisch aussagekräftiges Beugungsbild zu erzeugen. Die geringe effektiv nutzbare Intensität der verfügbaren Röntgenquellen erfordert bislang lange Belichtungszeiten am Detektor, die das Verfahren auf dünne Bänder und schwach absorbierende Werkstücke beschränken. Wird die Messung zur Prozessregelung genutzt, folgen daraus längere Ansprechzeiten der Regelung und damit Störungen im Prozessablauf sowie eine geringere Produktivität und Produktqualität.

Die geringe effektiv nutzbare Röntgenstrahlung ist darauf zurückzuführen, dass die Röntgenröhre einen stark divergierenden, kegelförmigen primären Strahl erzeugt. Daher wird nur ein Teil der Röntgen-Photonen in Richtung der Probe ausgestrahlt. Eine zum Fokussieren eingesetzte röntgenoptische Einheit und Kapillare absorbieren einen großen Teil der Röntgenstrahlintensität. Hinzu kommt, dass insbesondere Kapillare bei der Verwendung kurzwelliger Röntgenstrahlung, wie z.B. Wolfram Kα-Strahlung, aufgrund des unzureichenden Winkels der Totalreflexion an den Kapillarwandungen nicht wirksam sind.

Aus EP 1 233 265 A ist es bekannt, mit Hilfe der Röntgenstrukturanalyse die Dicke einer Verzinkungsschicht auf einem metallischen Band zu untersuchen. Somit wird gemäß dieser Druckschrift die beschichtete Zinklage auf einem metallischen Band im Hinblick auf deren Dicke analysiert, wobei die Textur der Zinkschicht und des metallischen Bands nicht untersucht werden.

WO 2017/202904 A1 offenbart ein berührungsloses und zerstörungsfreies Bestimmen der Eigenschaften eines Metallprodukts während dessen metallurgischer Herstellung nach dem Prinzip der Röntgenstrahlbeugung. Hierbei wird die Mikrostruktur eines Metallprodukts durch den Einsatz einer Röntgenquelle und eines Röntgendetektors ermittelt wird, wobei die Röntgenquelle und der Röntgendetektor jeweils in einer aktiv gekühlten Aufnahmekammer angeordnet sind und das zu überprüfende Metallprodukt zwischen der Röntgenquelle und dem Röntgendetektor vorbeibewegt wird. Der hierbei eingesetzte Kollimator zur Bündelung der Röntgenstrahlung besteht aus einem Rohr und/oder einer Scheibe, welche nur Strahlen in Normalrichtung der Probe durchlässt. Daher wird der größte Teil der divergenten Röntgenstrahlung abgeschirmt. Insbesondere im Durchstrahlverfahren ist aufgrund der hohen Absorption aber eine hohe Strahlintensität erforderlich, um ein kontrastreiches, statistisch aussagekräftiges, hochauflösendes Beugungsbild zu erzeugen, das kürzere Belichtungszeiten zulässt und auch größere Probendicken ermöglicht.

Aus EP 3 372 994 A1 und aus dem Artikel von Tamura et.al.: "Submicron x-ray diffraction and its applications to problems in materials and environmental science" (Review of Scientific Instruments, Band 73 Nr. 3, veröffentlicht am 1. März 2002, Seiten 1369-1372) sind jeweils ein gattungsgemäßes Verfahren nach dem Oberbegriff von Anspruch 1 und eine gattungsgemäße Vorrichtung nach dem Oberbegriff von Anspruch 17 bekannt.

Entsprechend liegt der Erfindung die Aufgabe zugrunde, die Analyse eines polykristallinen Produkts hinsichtlich seiner Werkstoffeigenschaften zu optimieren und für eine größere Anzahl von verschiedenen Produkttypen zu erweitern.

Diese Aufgabe wird durch ein Verfahren mit den Merkmalen von Anspruch 1 und durch eine Vorrichtung mit den Merkmalen von Anspruch 17 gelöst. Vorteilhafte Weiterbildungen der Erfindung sind in den abhängigen Ansprüchen definiert.

Die Erfindung sieht ein Verfahren zum Bestimmen der Werkstoffeigenschaften eines polykristallinen, insbesondere metallischen Produkts während einer Herstellung oder Qualitätskontrolle des polykristallinen, insbesondere metallischen Produkts mittels Röntgenstrahlenbeugung unter Verwendung von wenigstens einer Röntgenquelle und wenigstens eines Röntgendetektors vor. Bei diesem Verfahren wird eine von der Röntgenquelle erzeugte Röntgenstrahlung auf eine Oberfläche des polykristallinen Produkts gerichtet und das hieraus resultierende Beugungsbild der Röntgenstrahlung von dem Röntgendetektor aufgenommen. Ein hierbei eingesetzter Röntgenspiegel ist rotationssymmetrisch ausgebildet und umfasst an seiner Innenumfangsfläche eine Spiegelfläche, wobei die Röntgenstrahlung nach dem Austreten aus der Röntgenquelle durch den Röntgenspiegel geleitet wird, wobei die Röntgenstrahlung an der Spiegelfläche des Röntgenspiegels eine Bragg-Reflexion erfährt und durch den Röntgenspiegel sowohl monochromatisiert als auch in Richtung des polykristallinen Produkts und/oder des Röntgendetektors fokussiert wird und anschließend auf einer Oberfläche des metallischen Produkts auftrifft, wobei der Röntgendetektor in Form eines Flächendetektors ausgebildet ist.

In gleicher Weise sieht die Erfindung auch eine Vorrichtung zum Bestimmen der Werkstoffeigenschaften eines polykristallinen, insbesondere metallischen Produkts während einer Herstellung oder Qualitätskontrolle des polykristallinen, insbesondere metallischen Produkts mittels Röntgenstrahlenbeugung vor. Eine solche Vorrichtung umfasst wenigstens eine Röntgenquelle und wenigstens einen Röntgendetektor, wobei eine von der Röntgenquelle erzeugte Röntgenstrahlung auf eine Oberfläche des polykristallinen Produkts emittiert und das hieraus resultierende Beugungsbild der Röntgenstrahlung von dem Röntgendetektor detektiert werden kann. Die Vorrichtung umfasst des Weiteren einen Röntgenspiegel, der einen rotationssymmetrischen Trägerkörper mit einer mittigen Öffnung umfasst und somit derart beschaffen ist, dass die von der Röntgenquelle erzeugte Röntgenstrahlung durch den Röntgenspiegel hindurch geleitet werden kann, wobei an einer den Umfangsfläche des Trägerkörpers eine Spiegelfläche ausgebildet ist und die Röntgenstrahlung durch den Röntgenspiegel sowohl monochromatisiert als auch in Richtung des polykristallinen Produkts und/oder des Röntgendetektors fokussiert wird. Der Röntgendetektor ist in Form eines Flächendetektors ausgebildet ist.

Bei dem polykristallinen Produkt, dessen Werkstoffeigenschaften mittels der vorliegenden Erfindung bestimmt werden können, kann es sich um metallische Bänder und Bleche handeln, beispielsweise um warm- und kalt gewalzte und/oder geglühte Fe-, AI-, Ti-, Ni- und andere metallische Legierungen. Alternativ hierzu kann das polykristalline Produkt auch aus keramischen Werkstoffen bestehen, insbesondere Substrate aus Al₂O₃ oder ZrO₂.

Der vorliegenden Erfindung liegt die wesentliche Erkenntnis zugrunde, dass durch den Einsatz eines Röntgenspiegels und dessen zugehöriger Spiegelfläche die erzeugte Röntgenstrahlung in Richtung des zu untersuchenden polykristallinen Produkts und/oder auf den Röntgendetektor fokussiert wird und dabei die polychromatische Strahlung der Röntgenröhre weitestgehend verlustfrei monochromatisiert wird. Hierdurch wird vorteilhaft eine Erhöhung der effektiv wirksamen bzw. nutzbaren Intensität der Röntgenstrahlung erreicht, die auf das zu untersuchende Produkt gerichtet wird.

Der Röntgenspiegel, der bei der vorliegenden Erfindung zum Einsatz kommt, ersetzt einen Monochromator und vermeidet damit auch den durch den Monochromator, bzw. den durch den Kβ-Absorptionsfilter ansonsten hervorgerufenen Absorptionsverlust. Zudem wird die primäre Röntgenstrahlung fokussiert oder parallelisiert. Im Vergleich zu herkömmlichen Multilayersysteme ist der Aufbau des besagten Röntgenspiegels in Bezug auf die Strahlausbeute effektiver und kann im Betrieb kostengünstiger eingesetzt werden, weil beispielsweise nicht die Erzeugung eines permanenten Vakuums notwendig ist.

Weitere Vorteile der Erfindung liegen in einer kürzeren Ansprechzeit der Regelung sowie einer möglichen Erweiterung des Messprinzips der Röntgenstrukturanalyse auf dickere Produkte (beispielsweise metallische Bänder) und stärker absorbierende Werkstoffe durch bessere Ausbeute der von der Röntgenröhre erzeugten primären Strahlintensität. Die Anwendung der vorliegenden Erfindung bewirkt ein verlustarmes Fokussieren bzw. Parallelisieren des Röntgenstrahls, was zu einer höheren Anzahl der gebeugten Photonen und damit zu einer höheren effektiven Intensität des Röntgenstrahls, einer verbesserten Qualität des Beugungsbilds und damit zu einer besseren statistischen Zuverlässigkeit der Röntgenmessung führt.

In vorteilhafter Weiterbildung der Erfindung ist die Spiegelfläche des Röntgenspiegels in Bezug auf eine Mittelachse, mit der die Röntgenstrahlung von der Röntgenquelle emittiert wird, sphärisch gekrümmt oder zylindrisch ausgebildet. Hierbei kann die Spiegelfläche des Röntgenspiegels aus hochorientierten Graphitkristallen bestehen, beispielsweise in Form einer folienartigen Beschichtung, die an der Innenumfangsfläche des rotationssymmetrischen Trägerkörpers angebracht ist, wobei dieser Trägerkörper Teil der erfindungsgemäßen Vorrichtung ist. Jedenfalls wird die von der Röntgenröhre emittierte Strahlung an den gekrümmten Graphitkristallfolien durch Bragg-Reflexion sowohl fokussiert als auch monochromatisiert. Der Fokus wird über die Krümmung der Folie eingestellt.

In Bezug auf den Trägerkörper des Röntgenspiegels wird an dieser Stelle gesondert darauf hingewiesen, dass dieser vorzugsweise in Form eines Torus, d.h. toroidförmig, oder im Querschnitt ringförmig ausgebildet ist. Jedenfalls ist bei dieser Formgebung von Bedeutung, dass durch die mittige Öffnung des Trägerkörpers die Röntgenstrahlung in das Innere des Röntgenspiegels eintreten und auch durch den Röntgenspiegel hindurchtreten kann.

In vorteilhafter Weiterbildung der Erfindung kann die Röntgenröhre der Röntgenquelle eine Wolframanode, eine Molybdänanode und/oder eine Silberanode umfassen. Hierbei ist die Spiegelfläche des Röntgenspiegels insbesondere mit ihrer Krümmung derart ausgebildet, dass die von der Röntgenröhre erzeugte Röntgenstrahlung bei der Bragg-Reflexion mit ihrem Energiebereich um eine vorbestimmte Linie des Anodenmaterials selektiert wird.

Für den Fall, dass die Röntgenröhre der Röntgenquelle eine Wolframanode umfasst, erfolgt die Selektion des Energiebereichs der Röntgenstrahlung um die Wolfram-Kα-Linie bei einem Wert von 60 keV oder im Bereich von 60 keV.

Für den Fall, dass die Röntgenröhre der Röntgenquelle eine Molybdänanode umfasst, erfolgt die Selektion des Energiebereichs der Röntgenstrahlung um die Molybdän-Kα-Linie bei einem Wert von 17,5 keV oder im Bereich von 17,5 keV.

Für den Fall, dass die Röntgenröhre der Röntgenquelle eine Silberanode umfasst, erfolgt die Selektion des Energiebereichs der Röntgenstrahlung um die Silber-Kα-Linie bei einem Wert von 25,5 keV oder im Bereich von 25,5 keV.

In Bezug auf die vorstehend genannten Materialien Wolfram, Molybdän oder Silber wird an dieser Stelle gesondert hervorgehoben, dass eine Anode der Röntgenröhre der Röntgenquelle aus diesen Materialien hergestellt sein kann oder zumindest diese Materialien aufweisen kann.

Das erfindungsgemäße Bestimmen einer Werkstoffeigenschaft eines polykristallinen Produkts kann nach dem Durchstrahlprinzip oder nach dem Reflexions- bzw. Rückstrahlprinzip erfolgen.

Bei dem Durchstrahlprinzip tritt die monochromatisierte und/oder fokussierte Röntgenstrahlung durch das polykristalline Produkt hindurch. Hierbei sind einerseits die Röntgenquelle und andererseits der Röntgendetektor auf jeweils verschiedenen Seiten des polykristallinen Produkts angeordnet.

In vorteilhafter Weiterbildung des erfindungsgemäßen Verfahrens, wenn dieses auf dem Durchstrahlprinzip beruht, kann das polykristalline Produkt eine Dicke von maximal 30 mm, vorzugweise von maximal 25 mm, weiter vorzugsweise von maximal 20 mm, weiter vorzugsweise von maximal 15 mm, weiter vorzugsweise von maximal 10 mm, weiter vorzugweise von maximal 5 mm aufweisen. In Bezug auf die vorstehend genannten Werte versteht sich, dass es sich hierbei jeweils um eine mögliche Obergrenze für die Dicke des polykristallinen Produkts handeln kann.

Wie vorstehend erläutert, kann das erfindungsgemäße Verfahren auch nach dem Reflexions- bzw. Rückstrahlprinzip erfolgen. Hierbei sind die Röntgenquelle und der Röntgendetektor auf der gleichen Seite des polykristallinen Produkts angeordnet, wobei die von der Röntgenquelle erzeugte Röntgenstrahlung zumindest an oder in einer oberflächennahen Schicht des polykristallinen Produkts reflektiert wird.

In vorteilhafter Weiterbildung des erfindungsgemäßen Verfahrens, wenn dieses auf dem Reflexions- bzw. Rückstrahlprinzip beruht, kann das das polykristalline Produkt eine Dicke von zumindest 0,1 mm aufweisen. Vorzugsweise kann das polykristalline Produkt auch eine Dicke von 0,2 mm, weiter vorzugsweise von 0,3 mm, weiter vorzugsweise von 0,4 mm, weiter vorzugsweise von 0,5 mm, weiter vorzugsweise von 0,6 mm, weiter vorzugsweise von 0,7 mm, weiter vorzugsweise von 0,8 mm, weiter vorzugsweise von 0,9 mm, weiter vorzugsweise von 1 mm, weiter vorzugsweise von zumindest 2 mm, weiter vorzugsweise von zumindest 3 mm, weiter vorzugsweise von zumindest 4 mm, weiter vorzugsweise von zumindest 5 mm, weiter vorzugsweise von zumindest 6 mm, weiter vorzugsweise von zumindest 7 mm, weiter vorzugsweise von zumindest 8 mm, weiter vorzugsweise von zumindest 9 mm, weiter vorzugsweise von zumindest 10 mm, weiter vorzugsweise von zumindest 20 mm, weiter vorzugsweise von zumindest 100 mm oder weiter vorzugsweise eine Dicke von mehr als 200 mm aufweisen. In Bezug auf die vorstehend genannten Werte versteht sich, dass es sich hierbei jeweils um eine mögliche Untergrenze für die Dicke des polykristallinen Produkts handeln kann.

In Bezug auf die Möglichkeit, dass das erfindungsgemäße Verfahren auf dem Reflexions- bzw. Rückstrahlprinzip beruht, darf ergänzend darauf hingewiesen werden, dass es hiermit auch möglich ist, eine Beschichtung an der Oberfläche eines polykristallinen Produkts zu untersuchen und hiervon zumindest eine Werkstoffeigenschaft zu bestimmen.

Weitere Vorteile der Erfindung stellen sich wie folgt dar:
- Erhöhen der effektiv nutzbaren Röntgenstrahlintensität auf der Probe bzw. auf dem zu untersuchenden polykristallinen Produkt.
- Erzeugen eines schärferen, detailreicheren Beugungsbilds am Detektor.
- Erweitern des Anwendungsgebiets auf dickere Bänder und Werkstücke mit einer Dicke von >>1 mm durch Verwendung hochenergetischer fokussierter Röntgenstrahlung im Durchstrahlverfahren.
- Erweitern des Anwendungsgebiets auch auf stärker absorbierende Werkstoffe (z.B. Zink, Kupfer, Messing und andere Kupferlegierungen), die mit konventioneller Röntgenstrahlung bislang nicht untersucht werden konnten.
- Bestimmung zusätzlicher Werkstoffeigenschaften über die Kristallorientierung; insbesondere von physikalisch mechanischer Größen, wie z.B. anisotropes plastisches und anisotropes elastisches Verhalten, elektromagnetische Eigenschaften, Rekristallisationsgrad und/oder Korngröße.
- Verkürzte Ansprechzeit und verbesserte Regelung in Werkstoffbehandlungsanlagen.

Nachstehend sind bevorzugte Ausführungsbeispiele der Erfindung anhand einer schematisch vereinfachten Zeichnung im Detail beschrieben.

Es zeigen:
- Fig. 1: eine Darstellung einer erfindungsgemäßen Vorrichtung nach einer ersten Ausführungsform,
- Fig. 2: eine Darstellung einer erfindungsgemäßen Vorrichtung nach einer zweiten Ausführungsform,
- Fig. 3-5: jeweils verschiedene Varianten zur Fokussierung der Röntgenstrahlung in Richtung des zu untersuchenden Produkts,
- Fig. 6: ein beispielhaftes Diagramm für die Strahlintensität über den Photonenfluss,
- Fig. 7: ein vereinfachtes Anwendungsbeispiel für den Einsatz einer erfindungsgemäßen Vorrichtung in einer Produktionsanlage, und
- Fig. 8: weitere Beispiele für einen Einsatz der erfindungsgemäßen Vorrichtung in einer Produktionsanlage.

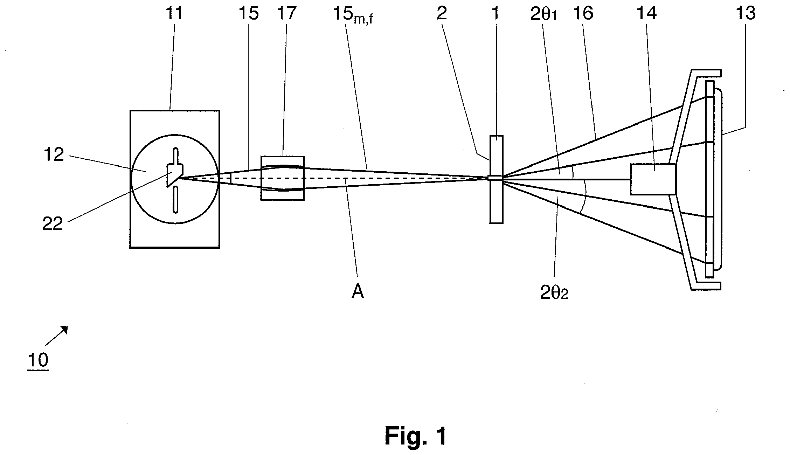

Nachstehend sind unter Bezugnahme auf die Fig. 1-8 bevorzugte Ausführungsformen einer Vorrichtung 10 und eines entsprechenden Verfahrens gemäß der vorliegenden Erfindung dargestellt und erläutert, um damit zumindest eine Werkstoffeigenschaft eines polykristallinen Produkts während seiner Herstellung oder während einer zugehörigen Qualitätskontrolle zu ermitteln. Gleiche Merkmale in der Zeichnung sind jeweils mit gleichen Bezugszeichen versehen. An dieser Stelle wird gesondert darauf hingewiesen, dass die Zeichnung lediglich vereinfacht und insbesondere ohne Maßstab dargestellt ist.

In der Fig. 1 ist vereinfacht eine erste Ausführungsform für die erfindungsgemäße Vorrichtung 10 gezeigt, mit der zumindest eine Werkstoffeigenschaft eines polykristallinen, insbesondere metallischen Produkts 1 nach dem Durchstrahlprinzip bestimmt werden kann.

Die Vorrichtung 10 umfasst wenigstens eine Röntgenquelle 11 und wenigstens einen Röntgendetektor 13. Diesbezüglich veranschaulicht die Fig. 1, dass Röntgenquelle 11 und Röntgendetektor 13 auf jeweils verschiedenen Seiten des polykristallinen Produkts 1 angeordnet sind.

Die Röntgenquelle 11 umfasst eine Röntgenröhre 12, die eine Anode 22 aufweist. Diese Anode 22 kann aus den Materialien Wolfram, Molybdän oder Silber bestehen oder zumindest eines dieser Materialien aufweisen.

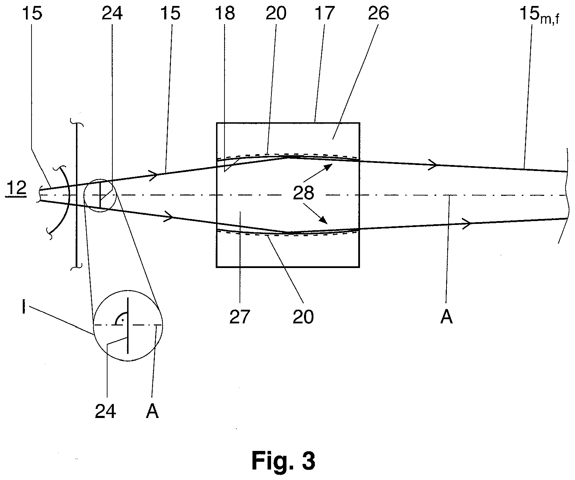

Die Vorrichtung 10 umfasst einen Röntgenspiegel 17, der zwischen der Röntgenquelle 11 und dem zu untersuchenden Produkt 1 angeordnet ist. Der Röntgenspiegel 17 ist rotationssymmetrisch ausgebildet und umfasst an seiner Innenumfangsfläche eine Spiegelfläche 18 (vgl. Fig.3). Weitere Details in Bezug auf den Röntgenspiegel 17 werden nachfolgend noch gesondert erläutert.
Die von der Röntgenquelle 11 erzeugte Röntgenstrahlung 15 weist eine Mittelachse A auf.

Die von der Röntgenquelle 11 emittierte Röntgenstrahlung 15 wird zunächst durch den Röntgenspiegel 17 hindurch geleitet. Hierbei erfährt die Röntgenstrahlung 15 eine Bragg-Reflexion, wobei die Röntgenstrahlung sowohl monochromatisiert als auch in Richtung des polykristallinen Produkts 1 fokussiert wird und anschließend auf eine Oberfläche 2 des Produkts 1 auftrifft.

In der Fig. 1 ist der Teil der Röntgenstrahlung, welcher durch die Bragg-Reflexion an der Spiegelfläche des Röntgenspiegels 17 monochromatisiert und in Richtung des polykristallinen Produkts 1 fokussiert worden ist, mit "15_{m,f}" bezeichnet. Ergänzend oder alternativ kann diese monochromatisierte Röntgenstrahlung 15_{m,f} auch in Richtung des Röntgendetektors 13 fokussiert sein.

Bei der Ausführungsform von Fig. 1 wird die Röntgenstrahlung 15_{m,f} nach dem Auftreffen auf das polykristalline Produkt 1 und im Zuge eines Hindurchtretens durch das Produkt 1 am Kristallgitter des Materials gebeugt. Wie eingangs bereits erläutert, hängt der Beugungswinkel entsprechend der Bragg-Gleichung von den Gitterparametern des Materials und der Wellenlänge der auftreffenden Röntgenstrahlung ab.

In der Fig. 1 ist das resultierende Beugungsbild der Röntgenstrahlung mit "16" bezeichnet, wobei dieses Beugungsbild dann mit dem Röntgendetektor 13 aufgenommen wird. Hierbei sind Winkel, um den das resultierende Beugungsbild 16 in Bezug auf bzw. relativ zur Mittelachse A aufgefächert wird, beispielsweise jeweils mit "2θ₁" und "2θ₂" bezeichnet.

Auf der Seite des Produkts 1, auf der sich der Röntgendetektor 13 befindet, ist angrenzend zum Röntgendetektor ein zweiter Sperrkörper 14 ("Beam-Stop") angeordnet. Dieser zweite Sperrkörper 14 bewirkt, dass Röntgenstrahlung, welche durch das Produkt 1 auf der Mittelachse A hindurchgetreten und nicht gebeugt worden ist, abgeschattet wird und entsprechend nicht auf den Röntgendetektor 13 gelangt, um diesen vor möglicher Schädigung zu schützen.

Das Untersuchungsverfahren des polykristallinen Produkts 1 mit der Ausführungsform von Fig. 1 nach dem Durchstrahlprinzip ist durch Belichtungszeit sowie Wellenlänge und Intensität der Röntgenstrahlung als auch durch die Dicke des zu durchstrahlenden Produkts 1 beschränkt. Gleichwohl hat ein solches Messverfahren nach dem Durchstrahlprinzip den Vorteil, dass die (Werkstoff-)Eigenschaften des Produkts 1 über seine gesamte Dicke erfasst werden können.

Jedenfalls eignet sich das Messverfahren nach dem Durchstrahlprinzip insbesondere für Produkte 1 mit einer geringen Dicke, beispielsweise für dünne Metall- oder Stahlbleche, die eine Dicke von weniger als 10 mm, vorzugsweise von weniger als 5 mm, weiter vorzugsweise von weniger als 1 mm aufweisen können.

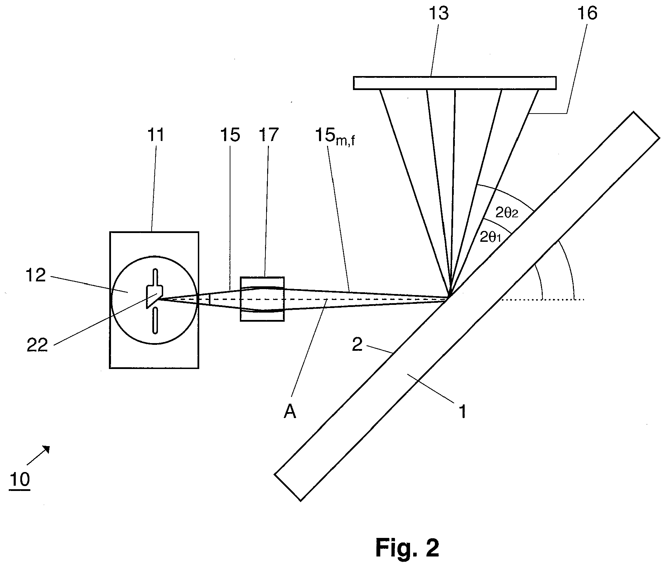

In der Fig. 2 ist vereinfacht eine zweite Ausführungsform für die erfindungsgemäße Vorrichtung 10 gezeigt, mit der zumindest eine Werkstoffeigenschaft eines polykristallinen, insbesondere metallischen Produkts nach dem Reflexions- bzw. Rückstrahlprinzip bestimmt werden kann. Im Unterschied zur Ausführungsform von Fig. 1 ist hierbei der Röntgendetektor 13 auf der gleichen Seite des zu untersuchenden polykristallinen Produkts 1 wie die Röntgenquelle 11 angeordnet.

Beim Untersuchungsverfahren des polykristallinen Produkts 1 mit der Ausführungsform von Fig. 2 nach dem Reflexionsprinzip wird der schräg zur Oberfläche 2 des Produkts 1 einfallende Röntgenstrahl entsprechend der Bragg-Gleichung am Kristallgitter reflektiert. Die Dicke der durchstrahlten Oberflächenschicht hängt neben dem Einstrahlwinkel und der Belichtungszeit von der Wellenlänge und der Intensität der Röntgenquelle ab. Das Rückstrahlverfahren kann zwar nur oberflächennahe Bereiche erfassen, dies aber auch bei vergleichsweise dicken Produkten 1, beispielsweise bei Metall- oder Stahlblechen mit einer Dicke von mehr als 10 mm, vorzugsweise mehr als 100 mm, weiter vorzugsweise mit einer Dicke von mehr als 200 mm.

In gleicher Weise wie bei der Darstellung von Fig. 1 ist für die Ausführungsform von Fig. 2 das resultierende Beugungsbild, welches sich aus der an der Oberfläche 2 des polykristallinen Körpers 1 reflektierten Röntgenstrahlung ergibt, mit "16" bezeichnet. Im Detail sind hierbei resultierende Beugungswinkel ebenfalls relativ zur Mittelachse A bemessen und beispielsweise jeweils mit "2θ₁" und "2θ₂" bezeichnet.

Im Übrigen kann bei der Ausführungsform von Fig. 2 das Erzeugen einer monochromatisierten und fokussierten Röntgenstrahlung 15_{m,f} durch den Röntgenspiegel 17 in gleicher Weise wie bei der Fig. 1 erfolgen, so dass zur Vermeidung von Wiederholungen auf die Erläuterungen zu Figur 1 verwiesen wird

Nachfolgend sind unter Bezugnahme auf die Fig. 3-5 weitere Varianten mit Details der Vorrichtung 10 zur Erzeugung der fokussierten und/oder monochromatisierten Röntgenstrahlung erläutert. Diese Varianten gemäß der Fig. 3-5 sind jeweils als Alternativen zu verstehen und können sowohl bei der ersten Ausführungsform der erfindungsgemäßen Vorrichtung 10 gemäß Fig. 1 als auch bei der zweiten Ausführungsform gemäß Fig. 2 zum Einsatz gelangen.

Fig. 3 zeigt eine vereinfachte Längsschnittsansicht durch den Röntgenspiegel 17.

Der Röntgenspiegel 17 umfasst einen rotationssymmetrischen Trägerkörper 26, der vorzugsweise toroid bzw. in Form eines Torus oder im Querschnitt ringförmig ausgebildet ist und jedenfalls eine mittige Öffnung 27 aufweist.

An einer Innenumfangsfläche 28 des Trägerkörpers 26 ist die vorstehend bereits genannte Spiegelfläche 18 des Röntgenspiegels 17 ausgebildet bzw. vorgesehen.

In Bezug auf die Mittelachse A, mit der die Röntgenstrahlung 15 von der Röntgenquelle 11 und der zugehörigen Röntgenröhre 12 (im Bildbereich von Fig. 3 links gezeigt) emittiert wird, ist die Spiegelfläche 18 des Röntgenspiegels 17 vorzugsweise sphärisch gekrümmt ausgebildet.

Die Spiegelfläche 18 des Röntgenspiegels 17 kann aus hochorientierten Graphitkristallen bestehen, die beispielsweise in Form einer folienartigen Beschichtung 20 an der Innenumfangsfläche 28 des Trägerkörpers 26 angebracht sind.

Alternativ hierzu ist es möglich, dass die hochorientierten Graphitkristalle physikalisch oder chemisch auf die Innenumfangsfläche 28 des Trägerkörpers 26 aufgebracht sind.

Jedenfalls können die hochorientierten Graphitkristalle oder Graphitkristallfolien 20 jeweils aus kristallographisch hochorientierten pyrolytischen Graphitkristallen (HOPG, HAPG) bestehen.

Bei der Variante von Fig. 3 ist zwischen der Röntgenröhre 12 und dem Röntgenspiegel 17 ein erster Sperrkörper 24 angeordnet, beispielsweise in Form einer plattenförmigen Scheibe.

Der Bereich I in Fig. 3 zeigt eine Vergrößerung der ersten Sperrkörpers 24 in einer Seitenansicht und verdeutlicht, dass dieser mit seiner Flächenerstreckung orthogonal zur Mittelachse A, d.h. in einem Winkel von 90° zur Mittelachse A angeordnet ist.

Die von der Röntgenröhre 12 emittierte Röntgenstrahlung 15 trifft zunächst auf den ersten Sperrkörper 24 auf. Hierbei wird mit dem ersten Sperrkörper 24 der Effekt erreicht, dass ein Teil der Röntgenstrahlung an dessen Außenumfang vorbeitritt und dadurch nach außen aufgefächert wird.

Der Teil der außen aufgefächerten Röntgenstrahlung 15 gelangt sodann hinein in den Röntgenspiegel 17 und wird darin an der Spiegelfläche 18 reflektiert. Wie bereits zur Fig. 1 erläutert, wird dieser Teil der Röntgenstrahlung dann durch die Bragg-Reflexion an der Spiegelfläche 18 des Röntgenspiegels 17 monochromatisiert und verlässt anschließend den Röntgenspiegel 17 als monochromatisierte und fokussierte Röntgenstrahlung 15_{m,f} (in der Fig. 3 nach rechts) in Richtung des polykristallinen Produkts 1 und/oder in Richtung des Röntgendetektors 13.

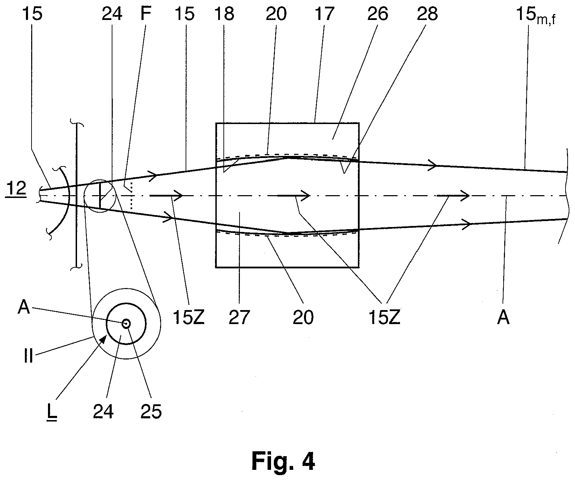

Die Variante nach der Fig. 4 unterscheidet sich von der Variante gemäß Fig. 3 einzig durch die Ausgestaltung des ersten Sperrkörpers 24.

Der Bereich II von Fig. 4 zeigt eine Vergrößerung der ersten Sperrkörpers 24 in einer Vorderansicht und verdeutlicht, dass dieser als Lochblende L mit einer Durchgangsöffnung 25 ausgebildet ist. Gleichwohl bleibt es dabei, dass der erste Sperrkörper 24, wie in dem Bereich I von Fig. 3 gezeigt, mit seiner Flächenerstreckung orthogonal zur Mittelachse A angeordnet ist.

Die in dem ersten Sperrkörper 24 gemäß der Variante von Fig. 4 ausgebildete Durchgangsöffnung 25 führt zu dem Effekt, dass der achsennahe Teil des Primärstrahls der Röntgenstrahlung, in Fig. 4 mit "15Z" bezeichnet, zunächst durch diese Durchgangsöffnung 25 und anschließend auch durch die mittige Öffnung 27 des Röntgenspiegels 17 hindurchtritt, ohne dabei in Kontakt bzw. in Wechselwirkung mit der Spiegelfläche 18 des Röntgenspiegels 17 zu gelangen. Anders ausgedrückt, durchläuft der achsennahe Teil 15Z des Primärstrahls der Röntgenstrahlung die mittige Öffnung 27 des Röntgenspiegels 17 in Richtung des zu untersuchenden polykristallinen Produkts 1, ohne dabei an der Spiegelfläche 18 des Röntgenspiegels reflektiert zu werden.
Der weitere Effekt des ersten Sperrkörpers 24, der wie bereits zur Variante von Fig. 3 erläutert darin besteht, dass die Röntgenstrahlung 15 an dem Außenumfang des ersten Sperrkörpers 24 vorbeitritt und in Richtung des Röntgenspiegels 17 nach außen hin aufgefächert wird, ist auch bei der Variante von Fig. 4 weiterhin gewährleistet.

Bei der Variante von Fig. 3 ist des Weiteren ein Filter F vorgesehen, der beispielsweise zwischen der Röntgenröhre 12 und dem Röntgenspiegel 17 angeordnet sein kann. Jedenfalls ist dieser Filter F vorzugsweise auf der Mittelachse A oder zumindest nahe hierzu angeordnet und führt dazu, dass der Teil der Röntgenstrahlung 15Z, welcher nach dem Durchqueren der Durchgangsöffnung 25 nahe oder auf der Mittelachse A verläuft, geeignet monochromatisiert wird.

Der Filter F weist im Fall einer Wolframanode die Materialien Ytterbium oder Hafnium auf oder besteht aus solchen Materialien. Des Weiteren wird in Bezug auf den Filter F darauf hingewiesen, dass dieser Filter F im Fall einer Molybdänanode das Material Zirkon aufweist oder aus dem Material Zirkon besteht, und/oder dass der Filter F im Fall einer Silberanode das Material Rhodium aufweist oder aus dem Material Rhodium besteht.

In Abweichung von der Darstellung in Fig. 4 kann der Filter F auch an einer anderen Position angeordnet sein, beispielsweise rechts von dem Röntgenspiegel 17 und jedenfalls vor dem zu untersuchenden polykristallinen Produkt 1.

Mit Hilfe des Filters F wird erreicht, dass der achsennahe Teil der Röntgenstrahlung 15Z vor dem Auftreffen auf der Oberfläche 2 des polykristallinen Produkts 1 geeignet monochromatisiert wird.

Der vorstehend erläuterte Effekt der Durchgangsöffnung 25, mit der bei der Variante gemäß Fig. 4 der erste Sperrkörper 24 als Lochblende L ausgebildet ist, hat zur Folge, dass dann auf der Oberfläche 2 des zu untersuchenden polykristallinen Produkts 1 zwei Strahlungsanteile der Röntgenstrahlung auftreffen, nämlich sowohl die mit Hilfe des Röntgenspiegels 17 monochromatisierte und fokussierte Röntgenstrahlung 15_{m,f} als auch der achsennahe Teil 15Z des Primärstrahls der Röntgenstrahlung, der durch den Filter F monochromatisiert worden ist. Mit diesen beiden Anteilen gleicher Energie der Röntgenstrahlung werden dann die Werkstoffeigenschaften des zu untersuchenden polykristallinen Produkts 1 bestimmt, nämlich entweder mit dem Durchstrahlprinzip gemäß der ersten Ausführungsform der Vorrichtung 10 von Fig. 1 oder mit dem Reflexionsprinzip gemäß der zweiten Ausführungsform der Vorrichtung 10 von Fig. 2.

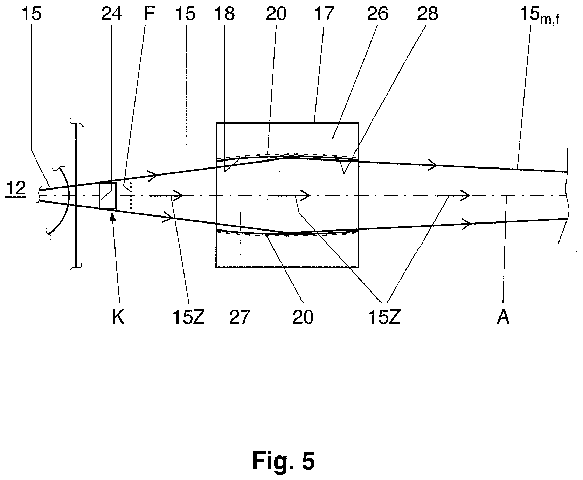

Die Variante nach der Fig. 5 unterscheidet sich von der Variante gemäß Fig. 4 einzig durch die Ausgestaltung des ersten Sperrkörpers 24. Bei der Variante von Fig. 5 ist der erste Sperrkörper 24 in Form eines insbesondere rohrförmigen Kollimators K ausgebildet. Mit einem solchen Kollimator K werden die gleichen Effekte wie bereits zur Variante von Fig. 4 erreicht, nämlich sowohl ein Auffächern der Röntgenstrahlung 15, die an einem Außenumfang hiervon verbreitet, nach außen in Richtung des Röntgenspiegels 17 als auch ein Durchlassen des achsennahen Teils 15Z des Primärstrahls der Röntgenstrahlung.

Auch bei der Variante von Fig. 5 ist ein Filter F vorgesehen, mit dem der achsennahe Teils 15Z des Primärstrahls der Röntgenstrahlung, welcher nicht in Wechselwirkung mit der Spiegelfläche 18 des Röntgenspiegels 17 gelangt, geeignet monochromatisiert wird.

In Bezug auf die Varianten gemäß Fig. 4 und Fig. 5 darf an dieser Stelle gesondert hervorgehoben werden, dass ein Durchmesser der Durchgangsöffnung 25 der Lochblende L bzw. ein Durchmesser und eine Längserstreckung des Kollimators K derart gewählt sind, dass der achsennahe Teil 15Z des Primärstrahls der Röntgenstrahlung dort bis zu einem Divergenzwinkel von 10° durchgelassen wird.

Alternativ hierzu ist es auch möglich, den Durchmesser der Durchgangsöffnung 25 bzw. die Abmessungen des Kollimators K in Bezug auf Durchmesser und Längserstreckung derart zu wählen, dass der Divergenzwinkel für den dort durchgelassenen achsennahen Teil 15Z des Primärstrahls der Röntgenstrahlung weniger als 10° beträgt, und beispielsweise den Wert von 9,5°, 9°, 8,5°, 8°, 7,5°, 7°, 6,5°, 6°, 5,5°, 5° oder noch geringere Werte annimmt. Die vorstehend genannten beispielhaften Werte einschließlich sämtlicher möglichen Werte dazwischen (beispielsweise 9,8°, 9,4°, 9,3°, 8,6°, 8,1° etc.) stellen jeweils Obergrenzen für den Divergenzwinkel dar, der für den achsennahen Teil 15Z des Primärstrahls der Röntgenstrahlung beim Hindurchtreten durch die Durchgangsöffnung 25 oder durch den Kollimator K resultiert.

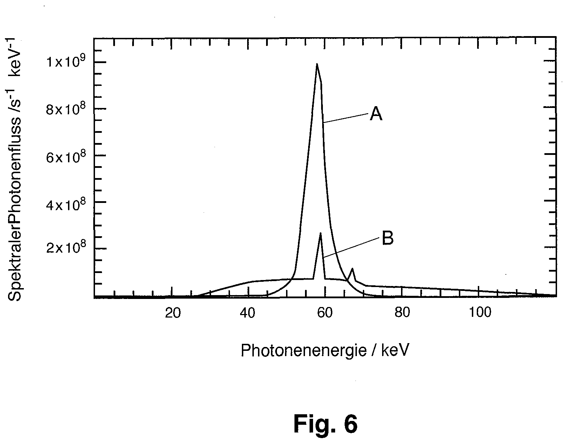

In der Abbildung von Fig. 6 sind für ein Beispiel einer Röntgenröhre 12 mit einer Wolframanode zwei Spektren A (mit Röntgenoptik ohne Kollimator und Filter) und B (mit Kollimator und Filter ohne Röntgenoptik) für den spektralen Photonenfluss als Funktion der Photonenenergie gezeigt. Aus dieser Abbildung wird deutlich, dass sich die über den Photonenfluss dargestellte Strahlintensität, im Energiebereich um die Kα-Fluoreszenzlinie der Wolfram-Röhre, durch die Verwendung der Röntgen-Spiegeloptik in Form des Röntgenspiegels 17 auf etwa das Fünffache steigern lässt.

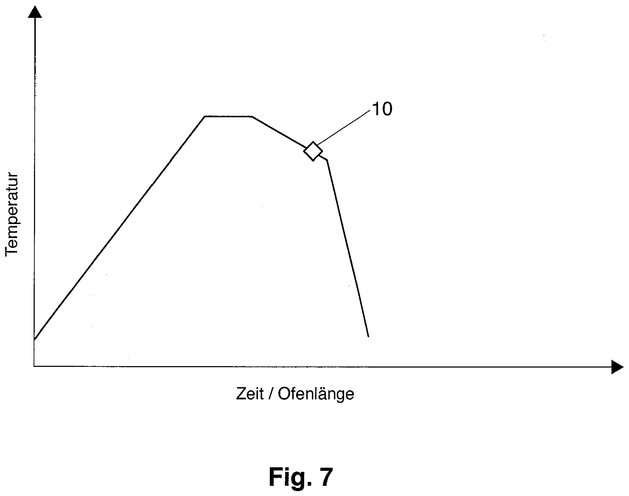

Die Abbildung von Fig. 7 verdeutlicht im Zusammenhang mit einem Beispiel für eine Produktionslinie schematisch eine mögliche Anordnung der erfindungsgemäßen Vorrichtung 10 in Bezug auf den Prozessverlauf für das zu untersuchende polykristalline Produkt 1, hier beispielsweise ein bandförmiges Material aus Metall oder Stahl, als Funktion von Zeit bzw. Ofenlänge.

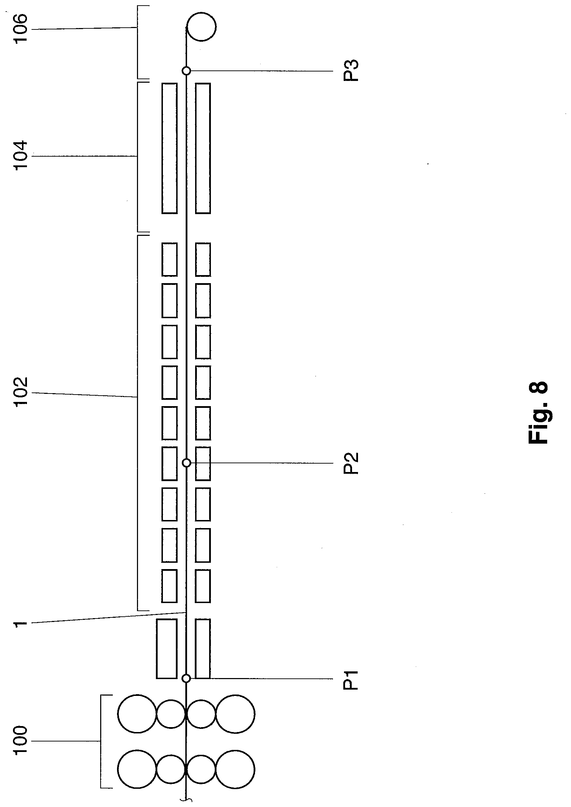

Schließlich wird auf die Abbildung von Fig. 8 hingewiesen, in der stark vereinfacht ein weiteres Beispiel für eine Produktionslinie für ein bandförmiges Material 1 gezeigt ist, in der das bandförmige Material, beispielsweise eine Bramme und/oder ein Stahlblech, in der Zeichenebene von links nach rechts transportiert und ganz rechts von einem Haspel 106 aufgewickelt wird. Weitere mögliche Komponenten dieser Produktionslinie bestehen aus zumindest einem Walzgerüst 100, einer Kühlstrecke 104 und einer Transportstrecke 104. Die möglichen Positionen, an denen die erfindungsgemäße Vorrichtung 10 innerhalb dieser Produktionslinie angeordnet sein kann und/oder ein Messvorgang nach dem erfindungsgemäßen Verfahren durchgeführt werden kann, sind in der Fig. 8 durch die Bezeichnungen "P1", "P2" und "P3" symbolisiert. Diesbezüglich versteht sich, dass die Vorrichtung 10 und das entsprechende Verfahren gemäß der vorliegenden Erfindung an einer oder mehreren dieser Positionen P1-P3 angeordnet bzw. durchgeführt werden kann.

Die vorstehend erläuterten Ausführungsformen der erfindungsgemäßen Vorrichtung 10 ermöglichen eine erhebliche Verbesserung der effektiven primären Strahlintensität und damit auch der gebeugten Strahlung, die sich an dem bzw. durch das untersuchte polykristalline Produkt 1 einstellt. Daraus ergeben sich folgende weitere Vorteile:
- Verkürzte Ansprechzeit einer Regelung, die in Verbindung mit der Vorrichtung 10 vorgesehen sein kann.
- Verbesserte Regelung über Bestimmung zusätzlicher anisotroper Werkstoffeigenschaften, insbesondere von Kristallorientierung, Rekristallisationsgrad und Korngröße.
- Erweiterung der Anwendung auf dickere Bänder und Werkstücke.
- Einsatz einer HOPG/HAPG-Optik bringt erhebliche Intensitätsgewinne gegenüber dem bislang benutzten Kβ-Absorptionsfilter. Des Weiteren ergeben sich im Betrieb und bei der Anschaffung Kostenvorteile gegenüber Multilayerspiegeln.
- Kürzere Belichtungszeit und damit höhere Auflösung auf bewegten Produkten, insbesondere laufender Bänder in Glühbehandlungsanlagen oder Walzwerken.
- Erweiterung der Anwendung auf stärker absorbierende Werkstoffe
- Besseres Messergebnis durch höhere Bildqualität mit stärkerem Kontrast, höherer Auflösung und verbesserter Zählstatistik
- Direkte neuartige, schnelle mathematische Texturanalyse aus den Beugungsbildern. Auf der Basis der Ergebnisse der Texturanalyse lassen sich on-line mechanische Kennwerte, wie z.B. anisotropes elastisches Werkstoffverhalten oder auch anisotropes plastisches Verhalten (r-Wert) bestimmen, so dass eine kontinuierliche Qualitätssicherung gewährleistet wird.
- Aus den Beugungsbildern lassen sich zudem Aussagen über Korngrößen treffen.
- Durch die Verwendung von modernen, schnell auslesbaren Halbleiterflächendetektoren zur winkeldispersiven Datenaufnahme lassen sich die Probleme (starke Detektorkühlung, geringe Informationstiefe der Kristallorientierung) der energiedispersiven Messmethoden vermeiden. Durch das schnelle Auslesen der Messdaten und deren Auswertung verbessert sich die Ansprechzeit zur Regelung erheblich.

### Bezugszeichenliste

- 1: polykristallines (z.B. metallisches) Produkt
- 2: Oberfläche (des Produkts 1)
- 10: Vorrichtung
- 11: Röntgenquelle
- 12: Röntgenröhre
- 13: Röntgendetektor
- 14: zweiter Sperrkörper ("Beam-Stop")
- 15: Röntgenstrahlung
- 15_{m,f}: monochromatisierte und fokussierte Röntgenstrahlung
- 15Z: Teil der Röngtenstrahlung nahe oder auf der Mittelachse A
- 16: Beugungsbild (der Röntgenstrahlung)
- 17: Röntgenspiegel
- 18: Spiegelfläche (des Röntgenspiegels 17)
- 20: Graphitkristallfolie
- 22: Anode (der Röntgenröhre 12)
- 24: erster Sperrkörper ("Beam-Stop")
- 25: Durchgangsöffnung (des Sperrkörpers 24)
- 26: Trägerkörper
- 27: mittige Öffnung (des Trägerkörpers 26)
- 28: Innenumfangsfläche
- 100: Walzgerüst
- 102: Kühlstrecke
- 104: Transportstrecke
- 106: Haspel
- A: Mittelachse
- F: Filter
- K: Kollimator
- L: Lochblende
- P1: erste mögliche Messposition (für die Vorrichtung 10)
- P2: zweite mögliche Messposition (für die Vorrichtung 10)
- P3: dritte mögliche Messposition (für die Vorrichtung 10)

## Patentansprüche

1. Verfahren zum Bestimmen der Werkstoffeigenschaften eines polykristallinen, insbesondere metallischen Produkts (1) während einer Herstellung oder Qualitätskontrolle des polykristallinen, insbesondere metallischen Produkts (1) mittels Röntgenstrahlenbeugung unter Verwendung von wenigstens einer Röntgenquelle (11) und wenigstens eines in Form eines Flächendetektors ausgebildeten Röntgendetektors (13), wobei eine von der Röntgenquelle (11) erzeugte Röntgenstrahlung (15) nach dem Austreten aus der Röntgenquelle (11) durch einen Röntgenspiegel (17) geleitet wird und mittels des Röntgenspiegels (17) auf eine Oberfläche (2) des polykristallinen Produkts (1) gerichtet wird und das hieraus resultierende Beugungsbild der Röntgenstrahlung (15) von dem Röntgendetektor (13) aufgenommen wird,
**dadurch gekennzeichnet,**
**dass** der Röntgenspiegel (17) rotationssymmetrisch ausgebildet ist und an seiner Innenumfangsfläche eine Spiegelfläche (18) umfasst, wobei die Röntgenstrahlung (15) an der Spiegelfläche (18) des Röntgenspiegels (17) eine Bragg-Reflexion erfährt und durch den Röntgenspiegel (17) sowohl monochromatisiert als auch in Richtung des polykristallinen Produkts (1) und/oder des Röntgendetektors (13) fokussiert wird und anschließend auf einer Oberfläche (2) des metallischen Produkts (1) auftrifft.

2. Verfahren nach Anspruch 1, **dadurch gekennzeichnet, dass** die Spiegelfläche (18) des Röntgenspiegels (17) in Bezug auf eine Mittelachse (A), mit der die Röntgenstrahlung (15) von der Röntgenquelle (11) emittiert wird, sphärisch gekrümmt oder zylindrisch ausgebildet ist.

3. Verfahren nach Anspruch 2, **dadurch gekennzeichnet, dass** eine Röntgenröhre (12) der Röntgenquelle (11) eine Wolframanode (22), eine Molybdänanode (22) und/oder eine Silberanode umfasst, wobei die Spiegelfläche (18) des Röntgenspiegels (17) insbesondere mit ihrer Krümmung derart ausgebildet ist, dass die von der Röntgenröhre (12) erzeugte Röntgenstrahlung (15) bei der Bragg-Reflexion mit ihrem Energiebereich um eine vorbestimmte Linie des Anodenmaterials selektiert wird.

4. Verfahren nach Anspruch 3, **dadurch gekennzeichnet, dass** die Röntgenröhre (12) der Röntgenquelle (11) eine Wolframanode umfasst, wobei die Selektion des Energiebereichs der Röntgenstrahlung (15) um die Wolfram-Kα-Linie bei einem Wert von 60 keV oder im Bereich von 60 keV erfolgt.

5. Verfahren nach Anspruch 3 oder 4, **dadurch gekennzeichnet, dass** die Röntgenröhre (12) der Röntgenquelle (11) eine Molybdänanode umfasst, wobei die Selektion des Energiebereichs der Röntgenstrahlung (15) um die Molybdän-Kα-Linie bei einem Wert von 17,5 keV oder im Bereich von 17,5 keV erfolgt.

6. Verfahren nach einem der Ansprüche 3 bis 5, **dadurch gekennzeichnet, dass** die Röntgenröhre (12) der Röntgenquelle (11) eine Silberanode umfasst, wobei die Selektion des Energiebereichs der Röntgenstrahlung (15) um die Silber-Kα-Linie bei einem Wert von 25,5 keV oder im Bereich von 25,5 keV erfolgt.

7. Verfahren nach einem der vorhergehenden Ansprüche, **dadurch gekennzeichnet, dass** im Bereich einer Mittelachse (A), mit der die Röntgenstrahlung (15) von der Röntgenquelle (11) emittiert wird, ein erster Sperrkörper (24) angeordnet ist, mit dem ein Teil der Röntgenstrahlung (15) nach einem Austreten aus der Röntgenquelle (11) abgeschattet wird.

8. Verfahren nach Anspruch 7, **dadurch gekennzeichnet, dass** der erste Sperrkörper (24) plattenförmig, insbesondere scheibenförmig ausgebildet und mit seiner Flächenerstreckung orthogonal zur Mittelachse (A) ausgerichtet ist, so dass ein Teil der Röntgenstrahlung (15) in Richtung des Röntgenspiegels (17) an dem ersten Sperrkörper (24) vorbeitritt und dadurch nach außen aufgefächert wird und anschließend auf die Spiegelfläche (18) des Röntgenspiegels (17) auftrifft.

9. Verfahren nach Anspruch 7 oder 8, **dadurch gekennzeichnet, dass** der erste Sperrkörper (24) als Lochblende (L) mit einer Durchgangsöffnung (25) oder in Form eines Kollimators (K) ausgebildet ist, so dass der achsennahe Teil des Primärstrahls der Röntgenstrahlung (15Z) durch die Durchgangsöffnung (25) bzw. den Kollimator (K) hindurchtritt und anschließend durch eine mittige Öffnung (27) des Röntgenspiegels (17) in Richtung des polykristallinen Produkts (1) hindurchläuft, ohne dabei auf die Spiegelfläche (18) des Röntgenspiegels (17) zu treffen.

10. Verfahren nach Anspruch 9, **dadurch gekennzeichnet, dass** der Durchmesser der Durchgangsöffnung (25) der Lochblende (L) bzw. Durchmesser und Längserstreckung des Kollimators (K) derart gewählt sind, dass der achsennahe Teil des Primärstrahls der Röntgenstrahlung (15Z) bis zu einem Divergenzwinkel von 10° durchgelassen wird.

11. Verfahren nach Anspruch 9 oder 10, **dadurch gekennzeichnet, dass** der Teil der Röntgenstrahlung (15Z), welcher nahe oder auf der Mittelachse (A) verläuft, mittels eines geeigneten Filters (F) monochromatisiert wird, vorzugsweise, dass der Filter (F) im Fall einer Wolframanode die Materialien Ytterbium oder Hafnium aufweist oder aus den Materialien Ytterbium oder Hafnium besteht, und/oder dass der Filter (F) im Fall einer Molybdänanode das Material Zirkon aufweist oder aus dem Material Zirkon besteht, und/oder dass der Filter (F) im Fall einer Silberanode das Material Rhodium aufweist oder aus dem Material Rhodium besteht.

12. Verfahren nach einem der vorhergehenden Ansprüche, **dadurch gekennzeichnet, dass** die monochromatisierte und/oder fokussierte Röntgenstrahlung (15_{m, f,} 15Z) durch das polykristalline Produkt (1) hindurchtritt.

13. Verfahren nach Anspruch 12, **dadurch gekennzeichnet, dass** das polykrista-Iline Produkt (1) eine Dicke von maximal 30 mm, vorzugweise von maximal 25 mm, weiter vorzugsweise von maximal 20 mm, weiter vorzugsweise von maximal 15 mm, weiter vorzugsweise von maximal 10 mm, weiter vorzugweise von maximal 5 mm aufweist.

14. Verfahren nach Anspruch 12 oder 13, **dadurch gekennzeichnet, dass** auf einer Mittelachse (A), mit der die Röntgenstrahlung (15) von der Röntgenquelle (11) emittiert wird, und angrenzend zum Röntgendetektor (13) ein zweiter Sperrkörper (14) angeordnet ist, so dass die monochromatisierte und zumindest auf der Mittelachse (A) verlaufende Röntgenstrahlung (15Z) nach einem Hindurchtreten durch das polykristalline Produkt (1) durch den zweiten Sperrkörper (14) abgeschattet wird

15. Verfahren nach einem der Ansprüche 1 bis 11, **dadurch gekennzeichnet, dass** die monochromatisierte und/oder fokussierte Röntgenstrahlung (15_{m,f}, 15Z) zumindest in einer oberflächennahen Schicht (2) des polykristallinen Produkts (1) reflektiert wird.

16. Verfahren nach Anspruch 15, **dadurch gekennzeichnet, dass** das polykristalline Produkt (1) eine Dicke von zumindest 0,1 mm, vorzugsweise von 0,2 mm, weiter vorzugsweise von 0,3 mm, weiter vorzugsweise von 0,4 mm, weiter vorzugsweise von 0,5 mm, weiter vorzugsweise von 0,6 mm, weiter vorzugsweise von 0,7 mm, weiter vorzugsweise von 0,8 mm, weiter vorzugsweise von 0,9 mm, weiter vorzugsweise von 1 mm, weiter vorzugsweise von zumindest 2 mm, weiter vorzugsweise von zumindest 3 mm, weiter vorzugsweise von zumindest 4 mm, weiter vorzugsweise von zumindest 5 mm, weiter vorzugsweise von zumindest 6 mm, weiter vorzugsweise von zumindest 7 mm, weiter vorzugsweise von zumindest 8 mm, weiter vorzugsweise von zumindest 9 mm, weiter vorzugsweise von zumindest 10 mm, weiter vorzugsweise von zumindest 20 mm, weiter vorzugsweise von zumindest 100 mm oder weiter vorzugsweise eine Dicke von mehr als 200 mm aufweist.

17. Vorrichtung (10) zum Bestimmen der Werkstoffeigenschaften eines polykristallinen, insbesondere metallischen Produkts (1) während einer Herstellung oder Qualitätskontrolle des polykristallinen, insbesondere metallischen Produkts (1) mittels Röntgenstrahlenbeugung, umfassend
wenigstens eine Röntgenquelle (11) und wenigstens einen in Form eines Flächendetektors ausgebildeten Röntgendetektor (13), wobei eine von der Röntgenquelle (11) erzeugte Röntgenstrahlung (15) durch einen Röntgenspiegel (17) hindurch leitbar ist und mittels des Röntgenspiegels (17) auf eine Oberfläche (2) des polykristallinen Produkts (1) emittierbar ist und das hieraus resultierende Beugungsbild der Röntgenstrahlung (15) von dem Röntgendetektor (13) detektierbar ist,
**dadurch gekennzeichnet,**
**dass** der Röntgenspiegel (17) einen rotationssymmetrischen Trägerkörper (26) mit einer mittigen Öffnung (27) umfasst, und somit derart beschaffen ist, dass die von der Röntgenquelle (11) erzeugte Röntgenstrahlung (15) durch den Röntgenspiegel hindurch leitbar ist, wobei an der Innenumfangsfläche (28) des Trägerkörpers (26) eine Spiegelfläche (18) ausgebildet ist und die Röntgenstrahlung (15) durch den Röntgenspiegel (17) sowohl monochromatisiert als auch in Richtung des polykristallinen Produkts (1) und/oder des Röntgendetektors (13) fokussiert wird.

18. Vorrichtung (10) nach Anspruch 17, **dadurch gekennzeichnet, dass** der Trägerkörper (26) toroidförmig oder im Querschnitt ringförmig ausgebildet ist.

19. Vorrichtung (10) nach Anspruch 18, **dadurch gekennzeichnet, dass** die Spiegelfläche (18) des Röntgenspiegels (17) in Bezug auf eine Mittelachse (A), mit der die Röntgenstrahlung (15) von der Röntgenquelle (11) emittiert wird, sphärisch gekrümmt oder zylindrisch ausgebildet ist.

20. Vorrichtung (10) nach Anspruch 18 oder 19, **dadurch gekennzeichnet, dass** die Spiegelfläche (18) des Röntgenspiegels (17) aus hochorientierten Graphitkristallen (20) besteht.

21. Vorrichtung (10) nach Anspruch 20, **dadurch gekennzeichnet, dass** die hochorientierten Graphitkristalle in Form einer folienartigen Beschichtung (20) an der Innenumfangsfläche (28) des Trägerkörpers (26) angebracht sind.

22. Vorrichtung (10) nach Anspruch 20 oder 21, **dadurch gekennzeichnet, dass** die hochorientierten Graphitkristalle (20) physikalisch oder chemisch auf die Innenumfangsfläche (28) des Trägerkörpers (26) aufgebracht sind

23. Vorrichtung (10) nach einem der Ansprüche 20 bis 22, **dadurch gekennzeichnet, dass** die hochorientierten Graphitkristalle (20) oder Graphitkristallfolien (20) jeweils aus kristallographisch hochorientierten pyrolytischen Graphitkristallen (HOPG, HAPG) bestehen.

24. Vorrichtung (10) nach einem der Ansprüche 17 bis 23, **gekennzeichnet durch** einen ersten Sperrkörper (24), der zwischen der Röntgenquelle (11) und dem Röntgenspiegel (17) angeordnet ist, wobei ein Teil der Röntgenstrahlung nach einem Austreten aus der Röntgenquelle (11) abgeschattet wird.

25. Vorrichtung (10) nach Anspruch 24, **dadurch gekennzeichnet, dass** der erste Sperrkörper (24) plattenförmig, insbesondere scheibenförmig ausgebildet und mit seiner Flächenerstreckung orthogonal zu einer Mittelachse (A), mit der die Röntgenstrahlung (15) von der Röntgenquelle (11) emittiert wird, ausgerichtet ist,

26. Vorrichtung (10) nach Anspruch 24 oder 25, **dadurch gekennzeichnet, dass** der erste Sperrkörper (24) als Lochblende (L) mit einer Durchgangsöffnung (25) oder als Kollimator (K) ausgebildet ist, vorzugsweise, dass der Durchmesser der Durchgangsöffnung (25) der Lochblende (L) bzw. Durchmesser und Längserstreckung des Kollimators (K) derart gewählt sind, dass der achsennahe Teil des Primärstrahls der Röntgenstrahlung (15Z), welcher durch die Durchgangsöffnung (25) bzw. den Kollimator (K) hindurchtritt, bis zu einem Divergenzwinkel von 10° durchgelassen wird.

27. Vorrichtung (10) nach einem der Ansprüche 17 bis 26, **gekennzeichnet durch** einen Filter (F), mit dem der achsennahe Teil des Primärstrahls der Röntgenstrahlung (15Z) monochromatisiert wird, vorzugsweise, dass der Filter (F) im Fall einer Wolframanode die Materialien Ytterbium oder Hafnium aufweist oder aus den Materialien Ytterbium oder Hafnium besteht, und/oder dass der Filter (F) im Fall einer Molybdänanode das Material Zirkon aufweist oder aus dem Material Zirkon besteht, und/oder dass der Filter (F) im Fall einer Silberanode das Material Rhodium aufweist oder aus dem Material Rhodium besteht.

28. Vorrichtung (10) nach einem der Ansprüche 17 bis 27, **dadurch gekennzeichnet, dass** die Röntgenröhre (12) der Röntgenquelle (11) zumindest eine Anode bestehend aus Wolfram (W), Molybdän (Mb) und/oder Silber (Ag) umfasst, vorzugsweise, dass die Röntgenröhre (12) mehrere Anoden umfasst, die aus einer Wolframanode, einer Molybdänanode und/oder aus einer Silberanode gebildet sind.

29. Vorrichtung (10) nach einem der Ansprüche 17 bis 28, **dadurch gekennzeichnet, dass** die Röntgenquelle (11) und der Röntgendetektor (13) auf jeweils verschiedenen Seiten des polykristallinen Produkts (1) angeordnet sind, wobei die von der Röntgenquelle (11) erzeugte Röntgenstrahlung (15) durch das polykristalline Produkt (1) hindurchtritt.

30. Vorrichtung (10) nach Anspruch 29, **gekennzeichnet durch** einen zweiten Sperrkörper (14), der angrenzend zum Röntgendetektor (13) und auf einer Mittelachse (A), mit der die Röntgenstrahlung (15) von der Röntgenquelle (11) emittiert wird, angeordnet ist.

31. Vorrichtung (10) nach einem der Ansprüche 17 bis 28, **dadurch gekennzeichnet, dass** die Röntgenquelle (11) und der Röntgendetektor (13) auf der gleichen Seite des polykristallinen Produkts (1) angeordnet sind, wobei die von der Röntgenquelle (11) erzeugte Röntgenstrahlung (15) an einer Oberfläche (2) des polykristallinen Produkts (1) reflektiert wird.

## Claims

1. Method of determining the material properties of a polycrystalline, in particular metallic, product (1) during production or quality control of the polycrystalline, in particular metallic, product (1) by means of X-ray diffraction with use of at least one X-ray source (11) and at least one X-ray detector (13) constructed in the form of a surface detector, wherein an X-ray (15) produced by the X-ray source (11) after exit from the X-ray source (11) is conducted through an X-ray mirror (17) and directed by means of the X-ray mirror (17) onto a surface (2) of the polycrystalline product (1) and the refraction image, which results therefrom, of the X-ray (15) is recorded by the X-ray detector (13),
**characterised in that**
the X-ray mirror (17) is constructed to be rotationally symmetrical and has at its inner circumferential surface a mirror surface (18), wherein the X-ray (15) undergoes a Bragg reflection at the mirror surface (18) of the X-ray mirror (17) and is not only monochromatised, but also focused in the direction of the polycrystalline product (1) and/or the X-ray detector (13) by the X-ray mirror (17) and is subsequently incident on a surface (2) of the metallic product (1).

2. Method according to claim 1, **characterised in that** the mirror surface (18) of the X-ray mirror (17) is constructed to be spherically curved or cylindrical with respect to a centre axis (A) by which the X-ray (15) is emitted by the X-ray source (11).

3. Method according to claim 2, **characterised in that** an X-ray tube (12) of the X-ray source (11) comprises a tungsten anode (22), a molybdenum anode (22) and/or a silver anode, wherein the mirror surface (18) of the X-ray mirror (17) is constructed in such a way, in particular by the curvature thereof, that the X-ray (15) produced by the X-ray tube (12) is selected in the Bragg reflection with its energy range about a predetermined line of the anode material.

4. Method according to claim 3, **characterised in that** the X-ray tube (12) of the X-ray source (11) comprises a tungsten anode, wherein the selection of the energy range of the X-ray (15) about the tungsten Kα line takes place at a value of 60 keV or in the region of 60 keV.

5. Method according to claim 3 or 4, **characterised in that** the X-ray tube (12) of the X-ray source (11) comprises a molybdenum anode, wherein the selection of the energy range of the X-ray (15) about the molybdenum Kα line takes place at a value of 17.5 keV or in the region of 17.5 keV.

6. Method according to any one of claims 3 to 5, **characterised in that** the X-ray tube (12) of the X-ray source (11) comprises a silver anode, wherein the selection of the energy range of the X-ray (15) about the silver Kα line takes place at a value of 25.5 keV or in the region of 25.5 keV.

7. Method according to any one of the preceding claims, **characterised in that** a first blocking body (24) by which a path of the X-ray (15) is shaded after exit from the X-ray source (11) is arranged in the region of the centre axis (A) by which the X-ray (15) is emitted by the X-ray source (11).

8. Method according to claim 7, **characterised in that** the first blocking body (24) is configured to be plate-shaped, particularly disc-shaped, and is oriented with its surface dimension orthogonal to the centre axis (A) so that a part of the X-ray (15) in the direction of the X-ray mirror (17) bypasses the first blocking body (24) and thereby is fanned outwardly and is subsequently incident on the mirror surface (18) of the X-ray mirror (17).

9. Method according to claim 7 or 8, **characterised in that** the first blocking body (24) is constructed as an aperture (L) with a passage opening (25) or in the form of a collimator (K) so that the part of the primary beam of the X-ray (15Z) near the axis passes through the passage opening (25) or the collimator (K) and subsequently runs through a central opening (27) of the X-ray mirror (17) in the direction of the polycrystalline product (1) without **in that** case impinging on the mirror surface (18) of the X-ray mirror (17).

10. Method according to claim 9, **characterised in that** the diameter of the passage opening (25) of the aperture (L) or diameter and length dimension of the collimator (K) is or are selected in such a way that the part of the primary beam of the X-ray (15Z) near the axis is let through up to a divergence angle of 10°.

11. Method according to claim 9 or 10, **characterised in that** the part of the X-ray (15Z) which runs near or on the centre axis (A) is monochromatised by means of a suitable filter (F), preferably **in that** the filter (F) in the case of a tungsten anode comprises the material ytterbium or hafnium or consists of the material ytterbium or hafnium and/or the filter (F) in the case of a molybdenum anode comprises the material zirconium or consists of the material zirconium and/or the filter (F) in the case of a silver anode comprises the material rhodium or consists of the material rhodium.

12. Method according to any one of the preceding claims, **characterised in that** the monochromatised and/or focused X-ray (15_{m,f}, 15Z) passes through the polycrystalline product (1).

13. Method according to claim 12, **characterised in that** the polycrystalline product (1) has a thickness of most 30 mm, preferably at most 25 mm, more preferably at most 20 mm, more preferably at most 15 mm, more preferably at most 10 mm, more preferably at most 5 mm.

14. Method according to claim 12 or 13, **characterised in that** a second blocking body (14) is arranged on a centre axis (A) by which the X-ray (15) is emitted by the X-ray source (11) and adjacent to the X-ray detector (13) so that the monochromatised X-ray (15Z) running at least on the centre axis (A) is after passing through the polycrystalline product (1) shaded by the second blocking body (14).

15. Method according to any one of claims 1 to 11, **characterised in that** the monochromatized and/or focused X-ray (15_{m,f}, 15Z) is reflected at least in a layer (2) of the polycrystalline product (1) near the surface.

16. Method according to claim 15, **characterised in that** the polycrystalline product (1) has a thickness of at least 0.1 mm, preferably 0.2 mm, more preferably 0.3 mm, more preferably 0.4 mm, more preferably 0.5 mm, more preferably 0.6 mm, more preferably 0.7 mm, more preferably 0.8 mm, more preferably 0.9 mm, more preferably 1 mm, more preferably at least 2 mm, more preferably at least 3 mm, more preferably at least 4 mm, more preferably at least 5 mm, more preferably at least 6 mm, more preferably at least 7 mm, more preferably at least 8 mm, more preferably at least 9 mm, more preferably at least 10 mm, more preferably at least 20 mm, more preferably at least 100 mm, or more preferably has a thickness of more than 200 mm.

17. Device (10) for determining material properties of a polycrystalline, particularly metallic, product (1) during production or quality control of the polycrystalline, particularly metallic, product (1) by means of X-ray diffraction, comprising at least one X-ray source (11) and at least one X-ray detector (13) constructed in the form of a surface detector, wherein an X-ray (15) produced by the X-ray source (11) can be conducted through an X-ray mirror (17) and can be emitted onto a surface (2) of the polycrystalline product (1) by means of the X-ray mirror (17) and the refraction image, which results therefrom, of the X-ray (15) is detectable by the X-ray detector (13),
**characterised in that**
the X-ray mirror (17) comprises a rotationally symmetrical support body (26) with a central opening (27) and thus is provided in such a way that the X-ray (15) produced by the X-ray source (11) can be conducted through the X-ray mirror, wherein a mirror surface (18) is formed at the inner circumferential surface (28) of the support body (26) and the X-ray (15) is not only monochromatised, but also focused in the direction of the polycrystalline product (1) and/or the X-ray detector (13) by the X-ray mirror (17).

18. Device (10) according to claim 17, **characterised in that** the support body (26) is formed to be toroidal or to be annular in cross-section.

19. Device (10) according to claim 18, **characterised in that** the mirror surface (18) of the X-ray mirror (17) is formed to be spherically curved or cylindrical with respect to a centre axis (A) by which the X-ray (15) is emitted by the X-ray source (11).

20. Device (10) according to claim 18 or 19, **characterised in that** the mirror surface (18) of the X-ray mirror (17) consists of highly-oriented graphite crystals (20).

21. Device (10) according to claim 20, **characterised in that** the highly-oriented graphite crystals are applied in the form of a foil-like coating (20) on the inner circumferential surface (28) of the support body (26).

22. Device (10) according to claim 20 or 21, **characterised in that** the highly-oriented graphite crystals (20) are coated physically or chemically onto the inner circumferential surface (28) of the support body (26).

23. Device (10) according to any one of claims 20 to 22, **characterised in that** the highly-oriented graphite crystals (20) or graphite crystal foils (20) respectively consist of crystallographic highly-oriented pyrolytic graphite crystals (HOPG, HAPG).

24. Device (10) according to any one of claims 17 to 23, **characterised by** a first blocking body (24) arranged between the X-ray source (11) and the X-ray mirror (17), wherein a part of the X-ray is shaded after exit from the X-ray source (11).

25. Device (10) according to claim 24, **characterised in that** the first blocking body (24) is constructed to be plate-shaped, particularly disc-shaped and is oriented with its surface dimension orthogonal to a centre axis (A) by which the X-ray (15) is emitted by the X-ray source (11).

26. Device (10) according to claim 24 or 25, **characterised in that** the first blocking body (24) is constructed as an aperture (L) with a passage opening (25) or as a collimator (K), preferably **in that** the diameter of the passage opening (25) of the aperture (L) or diameter and length dimension of the collimator (K) is or are selected in such a way that the part of the primary beam of the X-ray (15Z) near the axis, which passes through the passage opening (25) or the collimator (K), is let through up to a divergence angle of 10°.

27. Device (10) according to any one of claims 17 to 26, **characterised by** a filter (F) by which the part of the primary beam of the X-ray (15Z) near the axis is monochromatised, preferably in that the filter (F) in the case of a tungsten anode comprises the material ytterbium or hafnium or consists of the material ytterbium of hafnium and/or the filter (F) in the case of a molybdenum anode comprises the material zirconium or consists of the material zirconium and/or the filter (F) in the case of a silver anode comprises the material rhodium or consists of the material rhodium.

28. Method (10) according to any one of claims 17 to 27, **characterised in that** the X-ray tube (12) of the X-ray source (11) comprises at least one anode consisting of tungsten (W), molybdenum (Mb) and/or silver (Ag), preferably **in that** the X-ray tube (12) comprises a plurality of anodes which are formed by a tungsten anode, a molybdenum anode and/or a silver anode.

29. Device (10) according to any one of claims 17 to 28, **characterised in that** the X-ray source (11) and the X-ray detector (13) are arranged on respectively different sides of the polycrystalline product (1), wherein the X-ray (15) produced by the X-ray source (11) passes through the polycrystalline product (1).

30. Device (10) according to claim 29, **characterised by** a second blocking body (14) which is arranged adjacent to the X-ray detector (13) and on a centre axis (A) by which the X-ray (15) is emitted by the X-ray source (11).

31. Device (10) according to any one of claims 17 to 28, **characterised in that** the X-ray source (11) and the X-ray detector (13) are arranged on the same side of the polycrystalline product (1), wherein the X-ray (15) produced by the X-ray source (11) is reflected at a surface (2) of the polycrystalline product (1).

## Revendications

1. Procédé de détermination des propriétés matérielles d'un produit polycristallin, notamment métallique (1), pendant une fabrication ou un contrôle de qualité du produit polycristallin, notamment métallique (1) au moyen de la diffraction des rayons X en utilisant au moins une source de rayons X (11) et au moins un détecteur de rayons X (13) conçu sous la forme d'un détecteur de surface, dans lequel un rayonnement X (15) généré par la source de rayons X (11) est dirigé, après sa sortie de la source de rayons X (11), à travers un miroir à rayons X (17) et est dirigé sur une surface (2) du produit polycristallin (1) au moyen dudit miroir à rayons X (17) et l'image de diffraction du rayonnement X (15) qui en résulte est enregistrée par le détecteur de rayons X (13),
**caractérisé en ce que**
le miroir à rayons X (17) est conçu avec une symétrie de rotation et comporte une surface de miroir (18) sur sa surface périphérique intérieure, dans lequel le rayonnement X (15) subit une réflexion de Bragg sur la surface de miroir (18) du miroir à rayons X (17), étant à la fois mono-chromatisé et focalisé par le miroir à rayons X (17) en direction du produit polycristallin (1) et/ou du détecteur de rayons X (13), et vient ensuite heurter une surface (2) du produit métallique (1).

2. Procédé selon la revendication 1, **caractérisé en ce que** la surface de miroir (18) du miroir à rayons X (17) est incurvée de manière sphérique ou cylindrique par rapport à un axe central (A) avec lequel le rayonnement X (15) est émis par la source de rayons X (11).

3. Procédé selon la revendication 2, **caractérisé en ce qu'**un tube à rayons X (12) de la source de rayons X (11) comprend une anode en tungstène (22), une anode en molybdène et/ou une anode en argent, la surface de miroir (18) du miroir à rayons X (17) étant conçue, en particulier avec sa courbure, de telle sorte que le rayonnement X (15) généré par le tube à rayons X (12) soit sélectionné avec sa plage d'énergie autour d'une ligne prédéterminée du matériau de l'anode lors de la réflexion de Bragg.

4. Procédé selon la revendication 3, caractérisé en ce le tube à rayons X (12) de la source de rayons X (11) comprend une anode en tungstène, la sélection de la plage d'énergie du rayonnement X (15) autour de la ligne Ka du tungstène étant effectuée à une valeur de 60 keV ou dans la plage de 60 keV.

5. Procédé selon la revendication 3 ou 4, **caractérisé en ce que** le tube à rayons X (12) de la source de rayons X (11) comprend une anode en molybdène, la sélection de la plage d'énergie du rayonnement X (15) autour de la ligne Ka du molybdène étant effectuée à une valeur de 17,5 keV ou dans la plage de 17,5 keV.

6. Procédé selon l'une des revendications 3 à 5, **caractérisé en ce que** le tube à rayons X (12) de la source de rayons X (11) comprend une anode en argent, la sélection de la plage d'énergie du rayonnement X (15) autour de la ligne Ka de l'argent étant effectuée à une valeur de 25,5 keV ou dans la plage de 25,5 keV.

7. Procédé selon l'une des revendications précédentes, **caractérisé en ce qu'**un premier corps de blocage (24) est disposé dans la zone d'un axe central (A) avec lequel le rayonnement X (15) est émis par la source de rayons X (11), corps avec lequel une partie du rayonnement X (15) est occultée après une sortie de la source de rayons X (11).

8. Procédé selon la revendication 7, **caractérisé en ce que** le premier corps de blocage (24) est conçu en forme de plaque, en particulier en forme de disque, et est orienté avec son extension de surface orthogonalement par rapport à l'axe central (A), de sorte qu'une partie du rayonnement X (15) passe devant le premier corps de blocage (24) en direction du miroir à rayons X (17) et est ainsi dispersée vers l'extérieur et vient ensuite frapper la surface de miroir (18) du miroir à rayons X (17).

9. Procédé selon la revendication 7 ou 8, **caractérisé en ce que** le premier corps de blocage (24) est conçu sous la forme d'un diaphragme perforé (L) avec une ouverture de passage (25) ou sous la forme d'un collimateur (K), de sorte que la partie proche de l'axe du faisceau primaire de rayons X (15Z) traverse l'ouverture de passage (25) ou le collimateur (K) et passe ensuite par une ouverture centrale (27) du miroir à rayons X (17) en direction du produit polycristallin (1), sans heurter la surface de miroir (18) du miroir à rayons X (17).

10. Procédé selon la revendication 9, **caractérisé en ce que** le diamètre de l'ouverture de passage (25) du diaphragme perforé (L) ou le diamètre et l'extension longitudinale du collimateur (K) sont choisis de telle sorte que la partie du faisceau primaire de rayons X (15Z) proche de l'axe soit transmise jusqu'à un angle de divergence de 10°.

11. Procédé selon la revendication 9 ou 10, **caractérisé en ce que** la partie du rayonnement X (15Z) qui passe à proximité de l'axe central (A) ou sur celui-ci est mono-chromatisée au moyen d'un filtre approprié (F), de préférence, que le filtre (F), dans le cas d'une anode en tungstène, comprend les matériaux ytterbium ou hafnium ou est constitué des matériaux ytterbium ou hafnium, et/ou **en ce que** le filtre (F), dans le cas d'une anode en molybdène, comprend du zirconium ou est constitué de zirconium, et/ou **en ce que** le filtre (F), dans le cas d'une anode en argent, comprend du rhodium ou est constitué de rhodium.

12. Procédé selon l'une des revendications précédentes, **caractérisé en ce que** les rayons X mono-chromatisés et/ou focalisés (15_{m, f,} 15Z) traversent le produit polycristallin (1).

13. Procédé selon la revendication 12, **caractérisé en ce que** le produit polycristallin (1) présente une épaisseur de 30 mm au maximum, de préférence de 25 mm au maximum, de préférence encore de 20 mm au maximum, de préférence encore de 15 mm au maximum, de préférence encore de 10 mm au maximum, de préférence encore de 5 mm au maximum.

14. Procédé selon la revendication 12 ou 13, **caractérisé en ce qu'**un second corps de blocage (14) est disposé sur un axe central (A) avec lequel le rayonnement X (15) est émis par la source de rayons X (11) et de manière adjacente au détecteur de rayons X (13), de sorte que le rayonnement X (15Z) mono-chromatisé et s'étendant au moins sur l'axe central (A) est occulté par le second corps de blocage (14) après avoir traversé le produit polycristallin (1).

15. Procédé selon l'une des revendications 1 à 11, **caractérisé en ce que** les rayons X mono-chromatisés et/ou focalisés (15_{m, f,} 15Z) sont réfléchis au moins dans une couche (2) proche de la surface du produit polycristallin (1).

16. Procédé selon la revendication 15, **caractérisé en ce que** le produit polycristallin (1) présente une épaisseur d'au moins 0,1 mm, de préférence de 0,2 mm, de préférence encore de 0,3 mm, de préférence encore de 0,4 mm, de préférence encore de 0,5 mm, de préférence encore de 0,6 mm, de préférence encore de 0,7 mm, de préférence encore de 0,8 mm, de préférence encore de 0,9 mm, de préférence encore de 1 mm, de préférence encore d'au moins 2 mm, de préférence encore d'au moins 3 mm, de préférence encore d'au moins 4 mm, de préférence encore d'au moins 5 mm, de préférence encore d'au moins 6 mm, de préférence encore d'au moins 7 mm, de préférence encore d'au moins 8 mm, de préférence encore d'au moins 9 mm, de préférence encore d'au moins 10 mm, de préférence encore d'au moins 20 mm, de préférence encore d'au moins 100 mm ou, de préférence encore, une épaisseur supérieure à 200 mm.

17. Dispositif permettant de déterminer les propriétés matérielles d'un produit polycristallin, notamment métallique (1), pendant une fabrication ou un contrôle de qualité du produit polycristallin, notamment métallique (1) au moyen de la diffraction des rayons X en utilisant au moins une source de rayons X (11) et au moins un détecteur de rayons X (13) conçu sous la forme d'un détecteur de surface, dans lequel un rayonnement X (15) généré par la source de rayons X (11) est dirigé, après sa sortie de la source de rayons X (11), à travers un miroir à rayons X (17) et est dirigé sur une surface (2) du produit polycristallin (1) au moyen dudit miroir à rayons X (17) et l'image de diffraction du rayonnement X (15) qui en résulte est enregistrée par le détecteur de rayons X (13),
**caractérisé en ce que**
le miroir à rayons X (17) comprend un corps de support (26) à symétrie de rotation avec une ouverture centrale (27), étant ainsi conçu de telle sorte que le rayonnement X (15) généré par la source de rayons X (11) peut être conduit à travers le miroir à rayons X, une surface de miroir (18) étant formée sur la surface périphérique intérieure (28) du corps de support (26) et le rayonnement X (15) étant à la fois mono-chromatisé et focalisé par le miroir à rayons X (17) en direction du produit polycristallin (1) et/ou du détecteur de rayons X (13).

18. Dispositif (10) selon la revendication 17, **caractérisé en ce que** le corps de support (26) présente une section transversale toroïdale ou annulaire.

19. Dispositif (10) selon la revendication 18, **caractérisé en ce que** la surface de miroir (18) du miroir à rayons X (17) est incurvée de manière sphérique ou cylindrique par rapport à un axe central (A) avec lequel le rayonnement X (15) est émis par la source de rayons X (11).

20. Dispositif (10) selon la revendication 18 ou 19, **caractérisé en ce que** la surface de miroir (18) du miroir à rayons X (17) est constituée de cristaux de graphite hautement orientés (20).

21. Dispositif (10) selon la revendication 20, **caractérisé en ce que** les cristaux de graphite hautement orientés sont appliqués sur la surface périphérique intérieure (28) du corps de support (26) sous la forme d'un revêtement du type feuille (20).

22. Dispositif (10) selon la revendication 20 ou 21, **caractérisé en ce que** les cristaux de graphite hautement orientés (20) sont appliqués physiquement ou chimiquement sur la surface périphérique intérieure (28) du corps de support (26).

23. Dispositif (10) selon l'une des revendications 20 à 22, **caractérisé en ce que** les cristaux de graphite hautement orientés (20) ou les feuilles de cristaux de graphite (20) sont respectivement constitués de cristaux de graphite pyrolytique hautement orientés du point de vue cristallographique (HOPG, HAPG).

24. Dispositif (10) selon l'une des revendications 17 à 23, **caractérisé par** un premier corps de blocage (24) qui est disposé entre la source de rayons X (11) et le miroir à rayons X (17), une partie du rayonnement X étant occultée après une sortie de la source de rayons X (11).

25. Dispositif (10) selon la revendication 24, **caractérisé en ce que** le premier corps de blocage (24) est conçu en forme de plaque, en particulier en forme de disque, et est orienté avec son extension de surface orthogonalement par rapport à un axe central (A) avec lequel le rayonnement X (15) est émis par la source de rayons X (11).

26. Dispositif (10) selon la revendication 24 ou 25, **caractérisé en ce que** le premier corps de blocage (24) est conçu sous la forme d'un diaphragme perforé (L) avec une ouverture de passage (25) ou sous la forme d'un collimateur (K), de préférence, le diamètre de l'ouverture de passage (25) du sténopé (L) ou le diamètre et l'extension longitudinale du collimateur (K) sont choisis de telle sorte que la partie du faisceau primaire de rayons X (15Z) proche de l'axe, qui traverse l'ouverture de passage (25) ou le collimateur (K), soit transmise jusqu'à un angle de divergence de 10°.

27. Dispositif (10) selon l'une des revendications 17 à 26, **caractérisé par** un filtre (F) permettant de mono-chromatiser la partie proche de l'axe du faisceau primaire de rayons X (15Z), de préférence **caractérisé en ce que** le filtre (F), dans le cas d'une anode en tungstène, comprend les matériaux ytterbium ou hafnium ou est constitué des matériaux ytterbium ou hafnium, et/ou **en ce que** le filtre (F), dans le cas d'une anode en molybdène, comprend du zirconium ou est constitué de zirconium, et/ou **en ce que** le filtre (F), dans le cas d'une anode en argent, comprend du rhodium ou est constitué de rhodium.

28. Dispositif (10) selon l'une des revendications 17 à 27, **caractérisé en ce que** le tube à rayons X (12) de la source de rayons X (11) comprend au moins une anode constituée de tungstène (W), de molybdène (Mb) et/ou d'argent (Ag), de préférence **en ce que** le tube à rayons X (12) comprend plusieurs anodes constituées d'une anode en tungstène, d'une anode en molybdène et/ou d'une anode en argent.

29. Dispositif (10) selon l'une des revendications 17 à 28, **caractérisé en ce que** la source de rayons X (11) et le détecteur de rayons X (13) sont disposés sur des faces respectives différentes du produit polycristallin (1), le rayonnement X (15) généré par la source de rayons X (11) traversant le produit polycristallin (1).

30. Dispositif (10) selon la revendication 29, **caractérisé par** un second corps de blocage (14) qui est disposé de manière adjacente au détecteur de rayons X (13) et sur un axe central (A) avec lequel le rayonnement X (15) provenant de la source de rayons X (13) est émis.

31. Dispositif (10) selon l'une des revendications 17 à 28, **caractérisé en ce que** la source de rayons X (11) et le détecteur de rayons X (13) sont disposés du même côté du produit polycristallin (1), le rayonnement X (15) généré par la source de rayons X (11) étant réfléchi sur une surface (2) du produit polycristallin (1).
